# EUROPEAN PATENT APPLICATION

(11) **EP 2 487 668 A1**
(43) Date of publication of application: **15.08.2012**
(21) Application number: 12150802.2
(22) Date of filing: 11.01.2012
(51) Int. Cl.: G09B 5/14, G06Q 10/10, G09B 7/00

(54) **Learner response system**

(30) Priority: 12.01.2011 GB 201100510
(71) Applicant: Promethean Limited, Blackburn Lancashire BB1 5TH (GB)
(72) Inventor: Coda, Christian, Blackburn, Lancashire BB1 5TH (GB)
(74) Representative: Williams, David John

(57) **Abstract**

There is provided a method, in a collaborative input system comprising a computer and a plurality of user terminals, in which system the user terminals are adapted to communicate with the computer system, the method comprising: defining one or more user groups; and allocating one or more of the plurality of user terminals to the one or more user groups.

## Description

### BACKGROUND TO THE INVENTION:

### Field of the Invention:

The present invention relates to collaborative input systems in which a plurality of users are provided with handsets as remote terminals to enable the users to provide responses to a centralized computer system. Such systems are typically known as learner response systems.

### Description of the Prior Art:

Learner response systems are well-known in the art. Typically a plurality of wireless handsets are distributed to each of a plurality of students in a classroom. The wireless handsets are adapted to communicate wirelessly with a central computer system. In advantageous arrangements, the central computer system also controls the display of an electronic whiteboard. Questions are displayed on the display of the electronic whiteboard, and each student can answer the questions by entering an answer at their own handset. The answer may be selection of a multiple choice option, or provision of a specific answer using a keypad on the handset. The answers are then wirelessly transmitted to the central computer system for evaluation and storage. In some implementations, the handsets are provided with displays for displaying information to the user. In some implementations the questions are displayed to the user using the display on the handset. This arrangement, in particular, facilitates so-called self-paced learning where a user can work through a set of questions or other exercise at their own pace.

It is an object of the present invention to provide an improved learner response system.

### SUMMARY OF THE INVENTION:

The invention provides a method, in a collaborative input system comprising a computer and a plurality of user terminals, in which system the user terminals are adapted to communicate with the computer system, the method comprising: defining one or more user groups; and allocating one or more of the plurality of user terminals to the one or more user groups.

The method may further comprise the step of defining a user terminal for each group as being a master user terminal.

The master user terminal may be enabled for communication with the computer system, and all other user terminals are disabled from communication with the computer system.

The method may further comprise running an interactive session on the computer system, wherein during the interactive session the computer system is arranged to receive messages from the plurality of user terminals.

The method may further comprise the step of, during said interactive session, enabling communication with the master user terminal within each group and disabling communication with the other user terminals within each group. The step of disabling communication may comprise disabling the transmission of responses from the user terminal associated with the interactive session.

The step of disabling the transmission of responses from the user terminal associated with the interactive session may comprise disabling the user terminal.

The step of disabling the transmission of responses from the user terminal associated with the interactive session may comprise disabling the transmission of message requests to the user terminal.

The step of disabling the transmission of responses from the user terminal associated with the interactive session may comprise discarding any message received from the user terminal.

A user terminal may only be allocated to one group. Results from a group may be displayed on a display as a display graph. An identity of each group may be displayed on a display. An identity of each user may be displayed on the display.

Each group may be created by selected the displayed user identity on the display under the control of the computer system, and associating the user identity with a displayed group.

The step of associating may comprise dragging a displayed icon representing a user into an association with a displayed icon representing the group.

The collaborative input system may further comprise an electronic whiteboard.

The interactive session may be a question and answer session, in which each group provides one or more answers to one or more questions posed during the session.

There is provided a computer program adapted, when run on a computer, to perform any defined method.

There is provided a computer program product for storing computer program code which, when run on a computer, performs any defined method.

There is provided a computer system adapted to perform any defined method.

There is provided a collaborative input system adapted to perform any defined method.

There is provided a computer system having means for performing any defined method.

There is provided a collaborative input system having means for performing any defined method.

### BRIEF DESCRIPTION OF THE FIGURES:

The invention is now described by way of example with reference to the accompanying drawings, in which:
Figure 1 illustrates an exemplary collaborative input system incorporating a learner response system;
Figures 2a to 2c illustrate exemplary user interface displays in a set-up operation in accordance with embodiments of the invention; and
Figures 3a to 3d illustrate exemplary user interface displays in an application operation in accordance with embodiments of the invention.

### DESCRIPTION OF THE PREFERRED EMBODIMENTS:

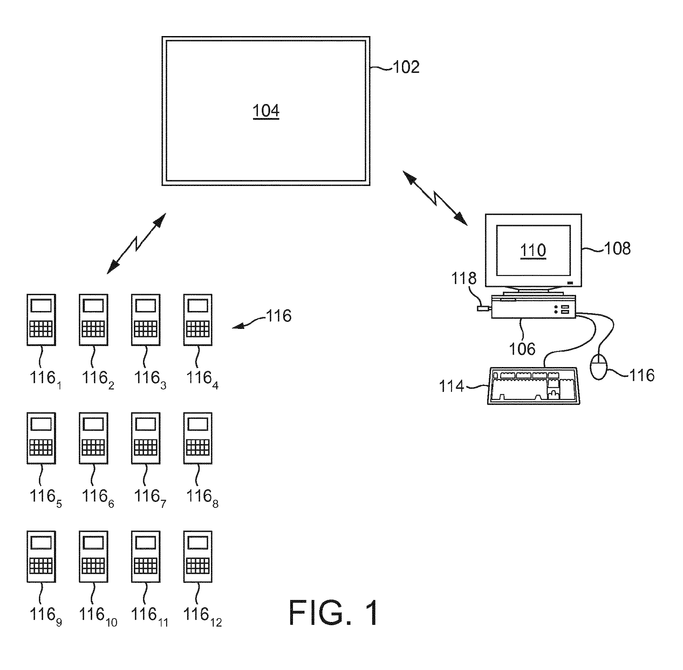

With reference to Figure 1, there is illustrated an exemplary environment in which the invention and its embodiments may be implemented. Figure 1 illustrates an interactive display system incorporating a learner response system. The interactive display system includes an electronic whiteboard 102 having an interactive display surface 104; a computer 106 having a monitor 108 with a display 110, and an associated keyboard 114 and an associated mouse 119; a plurality of remote handsets 116₁ to 116₁₂, generally denoted by reference numeral 116; and a system hub 118.

As known in the art, the electronic whiteboard 102 including the interactive display surface 104 is arranged such that images are displayed on the interactive display surface 104. The interactive display surface may be an emissive surface, or images may be displayed by means of a projection system (not shown). As also known in the art, the electronic whiteboard is arranged such that inputs on the interactive display surface 104, for example provided by a finger or pointing devices such as a pen, may be detected. The coordinates of such inputs can be determined to allow the finger or pointing device to manipulate the displayed images in the same way as a computer mouse may manipulate the images.

As known in the art the computer 106 runs computer software associated with applications which control the display of images on the interactive display surface 104, and which applications are controlled by the inputs detected at the interactive display surface 104. The computer system controls the display of images to the interactive display surface 104, for example by providing video signals to a projector or directly to an emissive surface, and manipulates the displayed images based on received signals representing the detected inputs at the interactive display surface.

Preferably the computer 106 and the electronic whiteboard 102 are provided with wireless communication means, such that data associated with detected inputs at the interactive display surface 104 are transmitted wirelessly to the computer 106. The computer may be connected wirelessly to drive the display of images to the interactive display surface, or for example a projector may be connected to the computer via a wire connection.

Preferably the computer 106 is provided with the communication hub 118 which provides for the wireless communication of the computer with the whiteboard. The communication hub 118 provides the wireless transceiver technology to allow for wireless communication, and runs firmware which enables the appropriate communication with the whiteboard.

In addition, the communication hub 118 preferably provides for wireless communication between the computer 106 and the remote handsets 116. The computer may wirelessly transmit signals to the remote handsets 116, and each of the remote handsets 116 may wirelessly transmit signals to the computer 104.

The remote handsets 116 provide the learner response system capability. In an example implementation, the software application running on the computer 106 is associated with a question and answer session, and for example questions with possible multiple choice answers are displayed on the interactive display surface 104. Each of the remote handsets 16 is allocated to and/or associated with a user, and each user answers the displayed questions by selecting an answer using the remote handset. The selected answers are then transmitted to the computer 106, such that the students work may be monitored. Such learner response systems are well-known in the art, and are known to be used in a variety of ways. For example question and answer sessions may be downloaded to the remote handsets such that a user may complete a question and answer session independently of the displayed information on the interactive display surface 104. As illustrated the remote handsets are provided with a display, but in other implementations no display may be provided. As illustrated the remote handset are provided with a keypad. The sophistication of the keypad, e.g. the number of buttons and/or the range of input type permitted, will differ according to implementations.

The interactive display system may be used as a conventional computer system, with the electronic whiteboard providing a display and input device for controlling a conventional computer software application. In addition the interactive display system may be used as a learner response system, in which a learner response specific software application is run on the computer system, and in which inputs are received from the remote handsets 116 during a learner response session.

In use, each of the remote terminals 116₁ to 116₁₂ is associated with a user, such that a user may provide inputs using a remote terminal. A user may use a remote terminal to register with the computer system, such that responses received at the computer system from a particular remote handset are automatically associated with a particular user. In embodiments, for each user session a registration process may take place to assign a user identity to each remote handset. In other embodiments, the remote handsets may be dedicated to a user such that no user registration is required.

During a learner-response session, questions may be displayed on the interactive display surface, and users may use the respective remote handsets 116 to answer such questions. An answer entered at a remote handset is transmitted to the computer system. The answers may simply require selection of a multiple choice option, or may require more sophisticated responses, such as alphanumeric text answers.

In accordance with the invention, the collaborative input system of Figure 1 is adapted such that one or more user, terminal or handset groups is defined, and one or more of the plurality of users, user terminals, or remote handsets is allocated to the one or more of such groups.

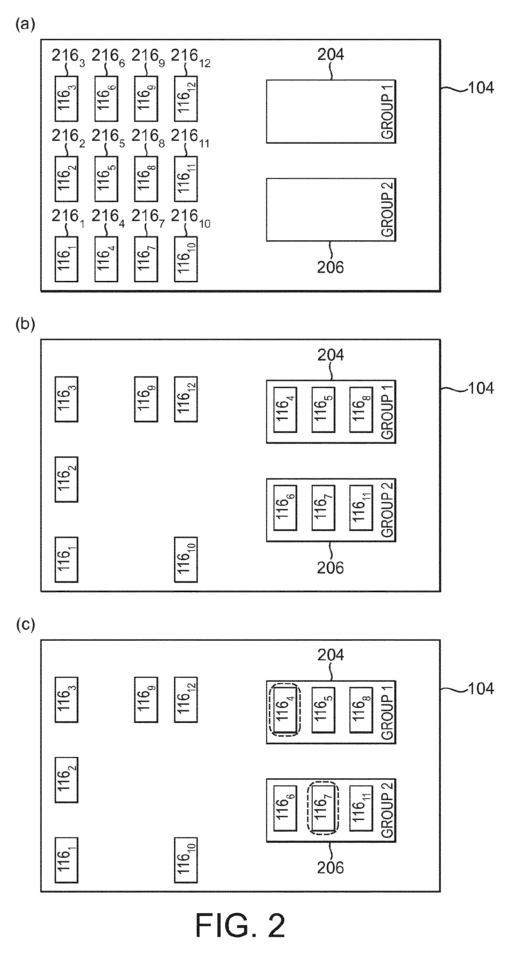

With reference to Figure 2a, there is illustrated an exemplary user interface display during the set-up of a learner-response session. Illustrated on the display is a set of graphical user interface (GUI) icons 216₁ to 216₁₂ representing the remote handsets 116₁ to 116₁₂. Also illustrated in Figure 2a is a GUI icon 204 representing a first group, labeled "Group 1", and a GUI icon 206 representing a second group, labeled "Group 2".

The user interface is adapted such that a user, such as a teacher, may select any one of the icons 216₁ to 216₁₂ representing the remote handsets 116₁ to 116₁₂, and 'drag and drop' them into the GUI icon 204 representing the first group, labeled "Group 1", or the GUI icon 206 representing the second group, labeled "Group 2".

In this way a user, such as a teacher, may allocate remote handsets to one of a plurality of groups. The user may provide the inputs to allocate the users to the group at the interactive surface..

As illustrated in Figure 2b, in this way the user allocates the remote handsets 116₄, 116₅, and 116₈ to Group 1, and the remote handsets 116₆, 116₇, and 116₁₁ to Group 2.

In a preferred arrangement, as will be discussed further hereinbelow, the user - such as the teacher - may then further designate one remote handset or user within each group as a master handset or user - "the group master".

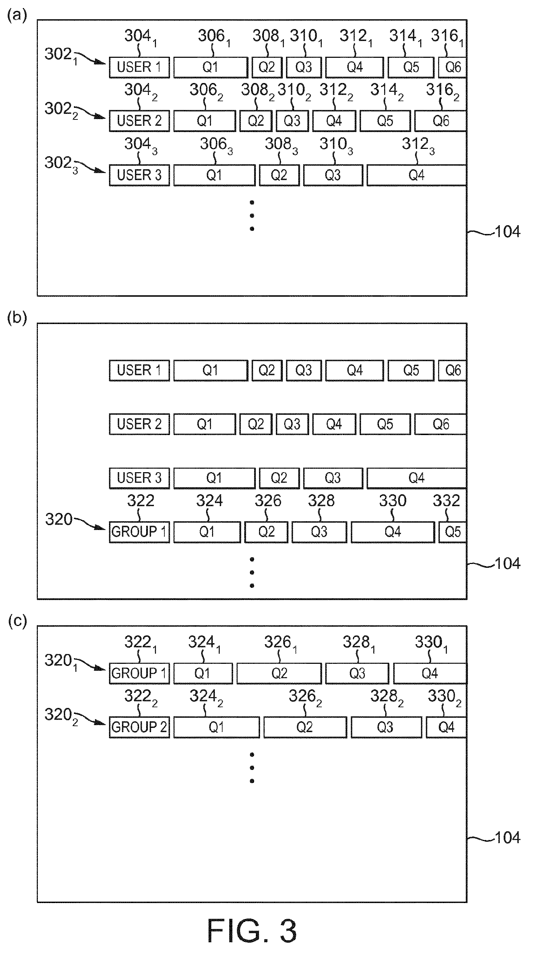

As illustrated in Figure 3c, in Group 1 the remote handset 116₄ is selected as the group master, and in Group 2 the remote handset 116₇ is selected as the group master.

The group master may be enabled for communication with the computer system 106, and all other user terminals may be disabled from communication with the computer system 106.

During the configuration operation illustrated with reference to Figures 2a to 2c, all remote handsets may be allocated to groups, or only a selected number. Thus some remote handsets may not be allocated to a group, and may continue to operate as an individual handset in accordance with prior art techniques in parallel with the grouped handsets.

Following the configuration operation illustrated with reference to Figures 2a to 2c, a normal operation may be initiated. A normal operation comprises a learner response session, such as a question and answer session, and may be initiated by a teacher selecting an appropriate session at the user interface. Such a session is an interactive session, in which the computer system is arranged to receive messages from the plurality of user terminals.

With reference to Figure 3a, there is illustrated an exemplary user interface display during an interactive learner response session without use grouping. As illustrated, there is provided a plurality of rows 302, three of which are illustrated, each row corresponding to a remote handset (and user). Each row is identified by a user identity, such as the name of the user associated with the remote handset, as denoted by reference numerals 304.

The row for each user illustrates the users progress through the interactive session. There is illustrated, for each user, a sequence of blocks which identifies a question number, and indicates that the user has completed that question. The length of the block may be representative of the time taken for the user to answer the question. Thus for the first user, in row 302₁, there is illustrated five blocks 306₁, 308₁, 310₁, 312₁, 314₁, representing five questions Q1, Q2, Q3, Q4, Q5. The block may be modified in some way, e.g. by adapting the colour of the block, to indicate a difficulty level of the question, and/or to indicate whether the answer provided was correct or incorrect. There may optionally be provided a current block identifying the current question a user is dealing with, and indicating the time elapsed in answering that question, as illustrated by block 316₁ in row 302₁. Although the questions are illustrated as being presented in a sequential order for each user - Q1 to Q5 - in embodiments the question order may be generated randomly, or different users may be working at different levels of difficulty and therefore working through different question sets.

With reference to Figure 3b, there is illustrated an adaptation to the user interface of Figure 3a in accordance with a first embodiment of the invention. As can be seen, in addition to the rows representing individual users there is provided a row 320 representing a group, in the illustrated case Group 1. There is provided an identity 312 of the group. There is illustrated four blocks 324, 326, 328, 330 representing four questions answered by the group, and one block 332 representing a current question being answered by the group.

The group information on row 320 represents the data for the group of users grouped into Group 1 in the configuration process. The individual users may still provide answers, and these may be displayed individually on the user interface. The group information displayed on the user interface may represent the average or consensus response of the individuals in the group. For example the time representation for the time taken to answer a question may represent the average time for all users in the group. The indication of the status of an answered question, e.g. whether correct or incorrect, may be based on an assessment of the majority answer from the group users.

In a preferred embodiment, during said interactive session, communication with the master user terminal within each group is enabled, and communication with the other user terminals within each group is disabled.

In this way a group of uses provide a single answer through a single remote handset. This may require the users to discuss the question and agree an answer before the user associated with the group master enters a response.

Disabling communication may comprise disabling the transmission of responses from the user terminals associated with the interactive session which are not the group master. Disabling the transmission of responses from the remote handsets associated with the interactive session which are not the group master may comprise disabling those remote handsets. Disabling the transmission of responses from the remote handsets associated with the interactive session may comprise disabling the transmission of message requests to the remote handsets from the computer.

Disabling the transmission of responses from the remote handsets associated with the interactive session may comprise discarding any message received from the remote handsets which are no the group master.

Preferably a user terminal can only be allocated to one group.

With reference to Figure 3c, there is illustrated an arrangement in which only information associated with use groups is displayed on the user interface. Thus the row 320 of Figure 3b is extended to two rows 320₁ and 320₂ representing first and second user groups.

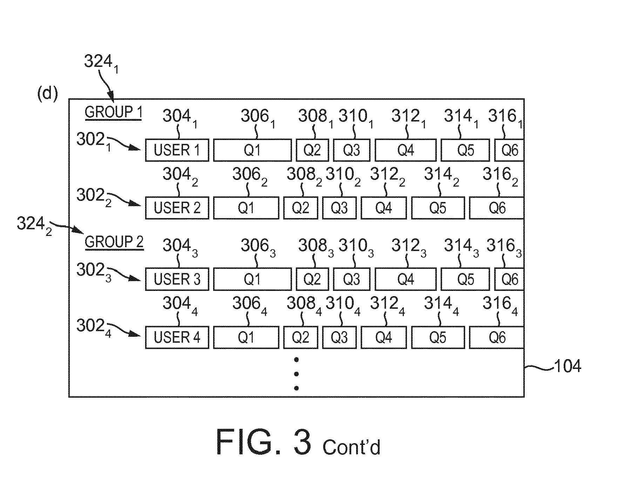

With reference to Figure 3d, there is illustrated a further alternative arrangement for displaying information on the user interface. In this arrangement, all the individual results for each user are displayed, as in Figure 3a. However each set of user results is presented in association with a group identity. Thus, for example and as shown in Figure 3d, User 1 and User 2 are associated with a first group, Group 1, identified by reference numeral 324₁; and User 3 and User 4 are associated with a second group, Group 2, identified by reference numeral 324₂.

As illustrated in Figures 3a to 3d, results from each group are preferably displayed on a display as a display graph. However the invention does not require results to be displayed graphically, or displayed at all. The computer may simply receive and store or process the data, rather than dynamically displaying it.

As illustrated in Figures 3a to 3d, where information is displayed preferably an identity of each group is displayed on the user interface display.

As illustrated in Figures 3a to 3d, an identity of each user may be displayed on the display. The identity of each user may be displayed for those users not allocated to a group, such that the responses from such users are displayed, as in Figure 3a. The identity of each user may be displayed for those users allocated to a group, such that the responses from such user are displayed as well as the group results, as in Figure 3b. The identity of the users making up a group may be displayed together with the results for the group (not sown in the Figures).

The display of the collaborative input system may comprise an electronic whiteboard.

The invention has been described by way of reference to particular examples and exemplary embodiments. One skilled in the art will appreciate that the invention is not limited to the details of the specific examples and exemplary embodiments set forth. Numerous other embodiments may be envisaged without departing from the scope of the invention, which is defined by the appended claims.

## Claims

1. A method, in a collaborative input system comprising a computer and a plurality of user terminals, in which system the user terminals are adapted to communicate directly with the computer system, the method comprising: defining one or more user groups; and allocating one or more of the plurality of user terminals to the one or more user groups.

2. The method according to claim 1 further comprising the step of defining a user terminal for each group as being a master user terminal, wherein the master user terminal is enabled for communication with the computer system, and all other user terminals are disabled from communication with the computer system.

3. The method of claim 1 or claim 2 further comprising running an interactive session on the computer system, wherein during the interactive session the computer system is arranged to receive messages from the plurality of user terminals, further comprising the step of, during said interactive session, enabling communication with the master user terminal within each group and disabling communication with the other user terminals within each group.

4. The method of claim 3 wherein the step of disabling communication comprises disabling the transmission of responses from the user terminal associated with the interactive session.

5. The method of claim 4 wherein the step of disabling the transmission of responses from the user terminal associated with the interactive session comprises one of: disabling the user terminal; disabling the transmission of message requests to the user terminal; or discarding any message received from the user terminal.

6. The method of any one of claims 1 to 5 wherein a user terminal can only be allocated to one group.

7. The method of any one of claims 1 to 6 wherein results from a group are displayed on a display as a display graph.

8. The method of any one of claims 1 to 7 wherein an identity of each group is displayed on a display and an identity of each user is displayed on the display, wherein each group is created by selected the displayed user identity on the display under the control of the computer system, and associating the user identity with a displayed group, and wherein the step of associating comprises dragging a displayed icon representing a user into an association with a displayed icon representing the group.

9. The method of any one of claim 3 to 8 in which the interactive session is a question and answer session, in which each group provides one or more answers to one or more questions posed during the session.

10. A computer program adapted, when run on a computer, to perform the method of any one of claims 1 to 9.

11. A computer program product for storing computer program code which, when run on a computer, performs the method of any one of claims 1 to 9.

12. A collaborative input system comprising a computer and a plurality of user terminals, in which system the user terminals are adapted to communicate directly with the computer system, the collaborative input system being adapted to: define one or more user groups; and allocate one or more of the plurality of user terminals to the one or more user groups.

13. The collaborative input system according to claim 12 further adapted to define a user terminal for each group as being a master user terminal, wherein the master user terminal is enabled for communication with the computer system, and all other user terminals are disabled from communication with the computer system.

14. The collaborative input system of claim 12 or 13 further adapted to run an interactive session on the computer system, wherein during the interactive session the computer system is arranged to receive messages from the plurality of user terminals, further adapted to, during said interactive session, enable communication with the master user terminal within each group and disable communication with the other user terminals within each group, wherein disabling communication comprises disabling the transmission of responses from the user terminal associated with the interactive session.

15. The collaborative input system of claim 14 wherein disabling the transmission of responses from the user terminal associated with the interactive session comprises one of: disabling the user terminal; disabling the transmission of message requests to the user terminal; or discarding any message received from the user terminal
